(19) **Europäisches Patentamt**
**European Patent Office**
**Office européen des brevets**

(11) **EP 4 746 065 A1**

(12) **EUROPEAN PATENT APPLICATION**

(43) Date of publication:
**20.05.2026 Bulletin 2026/21**

(21) Application number: **25216179.9**

(22) Date of filing: **17.11.2025**

(51) International Patent Classification (IPC):
$H01M\ 4/134^{(2010.01)}$   $H01M\ 4/38^{(2006.01)}$
$H01M\ 4/62^{(2006.01)}$   $H01M\ 10/052^{(2010.01)}$
$H01M\ 10/0568^{(2010.01)}$   $H01M\ 10/0569^{(2010.01)}$
$H01M\ 4/02^{(2006.01)}$

(52) Cooperative Patent Classification (CPC):
**H01M 10/0569; H01M 4/134; H01M 4/382;**
**H01M 4/62; H01M 10/052; H01M 10/0568;**
H01M 2004/021; H01M 2004/027; H01M 2300/0034

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **18.11.2024 KR 20240164342**

(71) Applicants:
• **SK On Co., Ltd.**
**Seoul 03161 (KR)**
• **SK Innovation Co., Ltd.**
**Seoul 03188 (KR)**

(72) Inventors:
• **PARK, Seong Jin**
**34124 Daejeon (KR)**
• **PARK, Doe Hee**
**34124 Daejeon (KR)**
• **PARK, Myung Soo**
**34124 Daejeon (KR)**
• **LEE, Han Sol**
**34124 Daejeon (KR)**
• **CHOI, Jae Young**
**34124 Daejeon (KR)**

(74) Representative: **Prüfer & Partner mbB**
**Patentanwälte · Rechtsanwälte**
**Sohnckestraße 12**
**81479 München (DE)**

(54) **LITHIUM SECONDARY BATTERY**

(57) A lithium secondary battery according to embodiments of the present disclosure includes an anode, a cathode disposed opposite the anode, and an electrolyte. The anode includes a lithium metal layer and a solid electrolyte interphase (SEI) layer disposed on the lithium metal layer. The anode has a first peak ratio of 1 to 7.

[FIG. 1]

EP 4 746 065 A1

**Description**

[BACKGROUND OF THE INVENTION]

1. Field of the Invention

The present disclosure relates to a lithium secondary battery.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

Among secondary batteries, lithium secondary batteries have been actively researched and developed due to their high operating voltage, high energy density per unit weight, and advantages in charging speed and weight reduction.

Recently, lithium secondary batteries including lithium metal electrodes have been studied and developed to achieve high energy density and fast charging characteristics.

When lithium secondary batteries including lithium metal electrodes are repeatedly charged and discharged, lithium dendrites may form due to non-uniform lithium deposition on the surface of the lithium metal electrode. Such lithium dendrites may protrude from the lithium metal surface, damage or penetrate the separator, and come into contact with the cathode, thereby significantly degrading the cycle life of the battery.

Accordingly, there is a need for modifications to the structure, surface treatment, and property enhancement of electrodes or separators, or for changes in the composition of the electrolyte, in order to improve the cycle life characteristics and stability of lithium metal batteries.

[SUMMARY OF THE INVENTION]

An object of the present disclosure is to provide a lithium secondary battery with improved electrochemical characteristics.

A lithium secondary battery according to exemplary embodiments of the present disclosure includes: an anode including a lithium metal layer and a solid electrolyte interphase (SEI) layer disposed on the lithium metal layer, the anode having a first peak ratio of 1 to 7, as defined by Equation 1 below; a cathode disposed opposite the anode; and an electrolyte.

$$[\text{Equation 1}]$$

$$R_1 = I_F/I_{CC}$$

In Equation 1, $R_1$ denotes the first peak ratio, $I_{CC}$ denotes the peak intensity in the range of 283.0 eV to 286.5 eV obtained from X-ray photoelectron spectroscopy (XPS) analysis of the solid electrolyte interphase layer, and $I_F$ denotes the peak intensity in the range of 682.0 eV to 686.5 eV obtained from the XPS analysis.

According to exemplary embodiments, the first peak ratio may be 2 to 6.

According to exemplary embodiments, the electrolyte may include a lithium salt and a fluorinated organic solvent.

According to exemplary embodiments, the fluorinated organic solvent may include a linear fluorinated organic solvent and a cyclic fluorinated organic solvent.

According to exemplary embodiments, the ratio of the content of the linear fluorinated organic solvent to the content of the cyclic fluorinated organic solvent in the total volume of the fluorinated organic solvent may be 3 to 6.

According to exemplary embodiments, the linear fluorinated organic solvent may include at least one selected from the group consisting of a fluorine-substituted linear ether solvent, a fluorine-substituted linear carbonate solvent, and a fluorine-substituted linear ester solvent.

According to exemplary embodiments, the cyclic fluorinated organic solvent may include a fluorine-substituted cyclic carbonate-based solvent.

According to exemplary embodiments, the lithium salt may include a first lithium salt including $LiPF_6$ and a second lithium salt including lithium bis(trifluoromethanesulfonyl)imide (LiTFSI).

According to exemplary embodiments, the ratio of the molar concentration of the first lithium salt to the molar concentration of the second lithium salt in the electrolyte may be greater than 1 and less than or equal to 3.

According to exemplary embodiments, the molar concentration of the first lithium salt may be 0.5 M to 1.0 M, and the molar concentration of the second lithium salt may be 0.01 M to 0.5 M.

A lithium secondary battery according to exemplary embodiments of the present disclosure includes: an anode including a lithium metal layer and a solid electrolyte interphase (SEI) layer disposed on the lithium metal layer, the anode having a second peak ratio of 3 to 15, as defined by Equation 2 below; a cathode disposed opposite the anode; and an electrolyte.

[Equation 2]

$$R_2 = I_F/I_{CO}$$

In Equation 2, $R_2$ denotes the second peak ratio, $I_{CO}$ denotes the peak intensity in the range of 287.5 eV to 292.0 eV obtained from X-ray photoelectron spectroscopy (XPS) analysis of the solid electrolyte interphase layer, and $I_F$ denotes the peak intensity in the range of 682.0 eV to 686.5 eV obtained from XPS analysis.

According to exemplary embodiments, the second peak ratio may be 5 to 10.

The lithium secondary battery according to exemplary embodiments of the present disclosure may include a solid electrolyte interphase (SEI) layer firmly attached to the surface of a lithium metal layer, thereby suppressing the formation of lithium dendrites.

The solid electrolyte interphase layer may induce uniform lithium deposition during repeated charge and discharge cycles of the battery. Accordingly, output performance may be maintained even during repeated charge and discharge cycles. In addition, the dense solid electrolyte interphase layer may block direct contact between the electrolyte and the lithium metal layer, thereby preventing electrolyte decomposition or side reactions from occurring on the surface of the lithium metal layer.

According to exemplary embodiments of the present disclosure, the lithium secondary battery may include an anode having a first peak ratio or a second peak ratio within a predetermined range. Accordingly, capacity degradation during repeated charge and discharge cycles may be prevented, and the cycle life characteristics of the battery may be improved.

[BRIEF DESCRIPTION OF THE DRAWINGS]

The above and other objects, features and advantages of the present disclosure will be more clearly understood from the following detailed description taken in conjunction with the accompanying drawings, in which:

FIG. 1 is a schematic cross-sectional view illustrating a lithium secondary battery according to exemplary embodiments; and
FIG. 2 is a graph showing XPS analysis results of an SEI layer of Example 1.

[DETAILED DESCRIPTION OF THE INVENTION]

According to exemplary embodiments of the present disclosure, a lithium secondary battery including a solid electrolyte interphase layer is provided.

Hereinafter, exemplary embodiments of the present disclosure will be described in detail with reference to the accompanying drawings. However, these embodiments are merely illustrative, and the present disclosure is not limited to the specific embodiments described as examples.

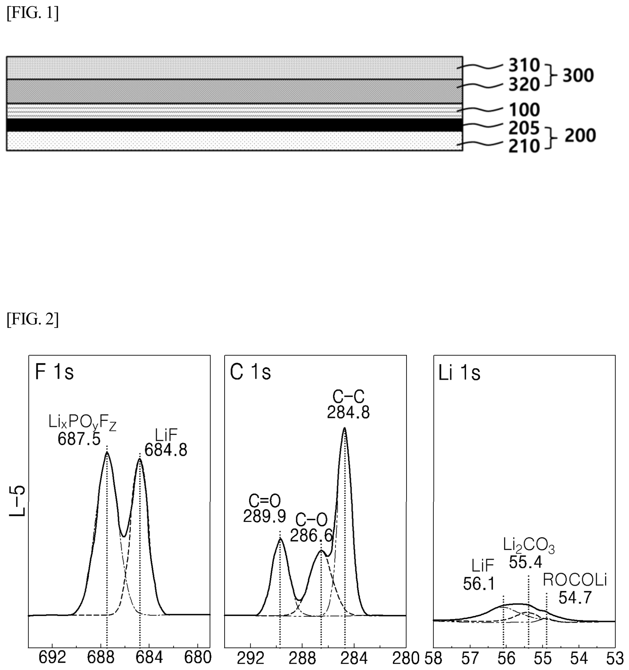

FIG. 1 is a schematic cross-sectional view illustrating a lithium secondary battery according to exemplary embodiments.

Referring to FIG. 1, the lithium secondary battery includes an anode 200 and a cathode 300 disposed opposite the anode 200. The anode 200 may include a lithium metal layer 210 and a solid electrolyte interphase (SEI) layer 205.

The lithium metal layer 210 is composed solely of lithium and therefore has a higher energy density than typical graphite-based and/or silicon-based anode active materials. Accordingly, by including the anode 200 having the lithium metal layer 210, a high-energy-density battery with improved output performance may be realized.

The lithium metal layer 210 may be substantially formed by metallic bonding between lithium atoms. The lithium metal layer 210 may be composed of, for example, a lithium foil or a lithium sheet. The lithium metal layer 210 may contain lithium in an amount of 90% by weight ("wt%") or more and may be substantially composed of lithium.

The lithium metal layer 210 may have a thickness of, for example, 10 μm to 50 μm.

The solid electrolyte interphase (SEI) layer 205 may be formed on the surface of the lithium metal layer 210 during the formation charging and discharging of the battery. According to exemplary embodiments, a fluorinated organic solvent included in the electrolyte described below may be decomposed on the surface of the lithium metal layer 210 to form the solid electrolyte interphase (SEI) layer 205.

The solid electrolyte interphase (SEI) layer 205 may be in direct contact with the lithium metal layer 210.

The solid electrolyte interphase (SEI) layer 205 may include lithium fluoride (LiF). In addition, the solid electrolyte interphase (SEI) layer 205 may include a lithium compound such as lithium carbonate, and may further include a byproduct such as a lithium phosphate compound generated by the decomposition of the electrolyte solvent or lithium salt.

The solid electrolyte interphase (SEI) layer 205 may be formed on the surface of the lithium metal layer 210 disposed opposite the cathode 300. Accordingly, when lithium ions migrate from the cathode 300 to the lithium metal layer 210, the solid electrolyte interphase (SEI) layer 205 may induce uniform deposition of lithium on the surface of the lithium metal layer 210 and suppress the formation of lithium dendrites.

The solid electrolyte interphase (SEI) layer 205 may have a thickness of, for example, 1 μm to 5 μm.

According to exemplary embodiments, the anode 200 may have a first peak ratio of 1 to 7, as defined by Equation 1 below. According to some embodiments, the anode 200 may have a first peak ratio of 2 to 6, as defined by Equation 1 below.

$$[\text{Equation 1}]$$

$$R_1 = I_F/I_{CC}$$

In Equation 1, $R_1$ denotes the first peak ratio, $I_{CC}$ denotes the peak intensity in the range of 283.0 eV to 286.5 eV obtained from X-ray photoelectron spectroscopy (XPS) analysis of the solid electrolyte interphase layer, and $I_F$ denotes the peak intensity in the range of 682.0 eV to 686.5 eV obtained from the XPS analysis.

According to exemplary embodiments, the anode 200 may have a second peak ratio of 3 to 15, as defined by Equation 2 below. In some embodiments, the anode 200 may have a second peak ratio of 5 to 10, as defined by Equation 2 below.

$$[\text{Equation 2}]$$

$$R_2 = I_F/I_{CO}$$

In Equation 2, $R_2$ denotes the second peak ratio, $I_{CO}$ denotes the peak intensity in the range of 287.5 eV to 292.0 eV obtained from X-ray photoelectron spectroscopy (XPS) analysis of the solid electrolyte interphase layer, and $I_F$ denotes the peak intensity in the range of 682.0 eV to 686.5 eV obtained from XPS analysis.

When analyzing the solid electrolyte interphase (SEI) layer 205 using X-ray photoelectron spectroscopy, multiple peaks may be observed in the XPS spectrum. For example, three to ten peaks may be observed in the XPS spectrum of the solid electrolyte interphase (SEI) layer 205.

In the XPS spectrum of the solid electrolyte interphase (SEI) layer 205, peaks may appear in the ranges of 283.0 eV to 286.5 eV, 287.5 eV to 292.0 eV, and 682.0 eV to 686.5 eV. The peak appearing in the range of 283.0 eV to 286.5 eV may be derived from carbon-carbon bonds included in the solid electrolyte interphase (SEI) layer 205. The peak appearing in the range of 287.5 eV to 292.0 eV may be derived from carbon-oxygen double bonds included in the solid electrolyte interphase (SEI) layer 205. The peak appearing in the range of 682.0 eV to 686.5 eV may be derived from lithium fluoride (LiF) included in the solid electrolyte interphase (SEI) layer 205.

The intensity of a peak within a predetermined range may refer to the maximum intensity of a single peak appearing within the range. When multiple peaks appear within the range, the intensity may refer to the maximum intensity of the peak having the highest intensity.

In some embodiments, the first peak ratio may be 2 to 6. In some embodiments, the first peak ratio may be 2.5 to 5.5 or 2.7 to 4.

Within the above range, the amount of lithium fluoride included in the solid electrolyte interphase (SEI) layer 205 may be appropriate, thereby improving the physical properties of the solid electrolyte interphase (SEI) layer 205 and enabling the solid electrolyte interphase (SEI) layer 205 to be firmly attached to the surface of the lithium metal layer 210.

For example, if the first peak ratio is less than 1 or greater than 7, the adhesion between the solid electrolyte interphase (SEI) layer 205 and the lithium metal layer 210 may be relatively reduced, and the formation of lithium dendrites may not be sufficiently suppressed.

In some embodiments, the second peak ratio may be 5 to 10. In some embodiments, the second peak ratio may be 5.5 to 9.7.

Within the above range, the amount of lithium fluoride included in the solid electrolyte interphase (SEI) layer 205 may be appropriate, thereby improving the physical properties of the solid electrolyte interphase (SEI) layer 205 and enabling the solid electrolyte interphase (SEI) layer 205 to be firmly attached to the surface of the lithium metal layer 210.

For example, if the second peak ratio is less than 3 or greater than 15, the adhesion between the solid electrolyte interphase (SEI) layer 205 and the lithium metal layer 210 may be relatively reduced, and the formation of lithium dendrites may not be sufficiently suppressed. X-ray photoelectron spectroscopy (XPS) analysis may be performed using a PHI Genesis (Ulvac PHI Inc., Japan) instrument under conditions of monochromatic Al K$\alpha$ irradiation (approximately 1486.6 eV).

The cathode 300 may include a cathode current collector 310 and a cathode active material layer 320 disposed on at least one surface of the cathode current collector 310.

The cathode current collector 310 may include stainless steel, nickel, aluminum, titanium, or an alloy thereof. The cathode current collector 310 may also include aluminum or stainless steel having a surface treated with carbon, nickel, titanium, or silver. The thickness of the cathode current collector may be, for example, 10 $\mu$m to 50 $\mu$m.

The cathode active material layer 320 may include a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

$$[\text{Formula 1}] \qquad Li_xNi_aM_bO_{2+z}$$

In Formula 1, x, a, b and z may satisfy $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Formula 1 indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element that contributes to the capacity/output activity of the cathode active material together with Co or Mn, such as Al.

For example, the cathode active material or the lithium-nickel metal oxide may include a layered structure or a crystal structure represented by Formula 2 below.

$$[\text{Formula 2}] \qquad Li_xNi_aM1_bM2_cO_{2+z}$$

In Formula 2, M1 may include Co, Mn, and/or Al. M2 may include the above-described auxiliary elements. In Formula 2, x, a, b, c and z may satisfy $0.9 \leq x \leq 1.2$, $0.6 \leq a \leq 0.99$, $0.01 \leq b+c \leq 0.4$, and $-0.5 \leq z \leq 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of lithium-nickel metal oxide particles, or may penetrate through the surface of the lithium-nickel metal oxide particles to be incorporated into the bonding structure represented by Formula 1 or Formula 2 above.

The cathode active material may include a nickel-cobalt-manganese (NCM)-based lithium oxide. In this case, an NCM-based lithium oxide having an increased content of nickel may be used.

Nickel (Ni) may serve as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

However, as the Ni content increases, the long-term storage stability and cycle life stability of the cathode or the secondary battery may be relatively reduced, and side reactions with the electrolyte may also increase. Nevertheless, according to exemplary embodiments, by including Co, the cycle life stability and capacity retention characteristics may be improved by Mn, while electrical conductivity is maintained.

The content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 3 below.

$$[\text{Formula 3}] \qquad p[Li_2MnO_3]\cdot(1\text{-}p)[Li_qJO_2]$$

In Formula 3, p and q may satisfy $0<p<1$, and $0.9\leq q\leq 1.2$, and J may include at least one element selected from Mn, Ni, Co, Fe, Cr, V, Cu, Zn, Ti, Al, Mg and B.

For example, a cathode slurry may be prepared by mixing a solvent and the cathode active material. The cathode slurry may be coated on the cathode current collector 310, followed by drying and roll-pressing to prepare the cathode active material layer 320. The coating process may be performed using methods such as gravure coating, slot die coating, simultaneous multilayer die coating, imprinting, doctor blade coating, dip coating, bar coating or casting, etc., but is not limited thereto. The cathode active material layer may further include a binder and optionally may further include a conductive material, a thickener or the like.

Non-limiting examples of the solvent used in the preparation of the cathode slurry may include N-methyl-2-pyrrolidone (NMP), dimethylformamide, dimethylacetamide, N,N-dimethylaminopropylamine, ethylene oxide, tetrahydrofuran or the like.

The binder may include polyvinylidene fluoride (PVDF), poly(vinylidene fluoride-co-hexafluoropropylene), polyacrylonitrile, polymethyl methacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode active material layer to enhance the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCF), and carbon fibers; and/or metal-based conductive materials such as tin, tin oxide, and titanium oxide; and perovskite materials such as $LaSrCoO_3$, and $LaSrMnO_3$, but is not limited thereto.

The cathode slurry may further include a thickener and/or a dispersant, as needed. In one embodiment, the cathode slurry may include a thickener such as carboxymethyl cellulose (CMC).

The lithium secondary battery includes an electrolyte. The electrolyte impregnates the anode and the cathode and may serve as a transport medium for lithium ions during battery charge and discharge.

In exemplary embodiments, the electrolyte may include a lithium salt and a fluorinated organic solvent. The lithium salt may include, for example, LiF, LiCl, LiBr, LiI, $LiNO_3$, $LiN(CN)_2$, $LiBF_4$, $LiClO_4$, $LiPF_6$, $Li(CF_3)_2PF_4$, $Li(CF_3)_3PF_3$, $Li(CF_3)_4PF_2$, $Li(CF_3)_5PF$, $Li(CF_3)_6P$, $LiCF_3SO_3$, $LiCF_3CF_2SO_3$, $Li(CF_3SO_2)_2N$, $Li(FSO_2)_2N$, $LiCF_3CF_2(CF_3)_2CO$, $Li(CF_3SO_2)_2CH$, $Li(SF_5)_3C$, $Li(CF_3SO_2)_3C$, $LiCF_3(CF_2)_7SO_3$, $LiCF_3CO_2$, $LiCH_3CO_2$, LiSCN, $(LiCF_3C(CF_3)_2COO$, or $Li(CF_3CF_2SO_2)_2N$. These may be used alone or in combination of two or more thereof.

In exemplary embodiments, the molar concentration of the lithium salt in the electrolyte may be 0.1 M to 2 M. In some embodiments, the molar concentration of the lithium salt in the electrolyte may be 0.5 M to 1.5 M. Within this range, the battery may be smoothly charged and discharged without precipitation of lithium.

In exemplary embodiments, the lithium salt may include a first lithium salt including $LiPF_6$ and a second lithium salt including lithium bis(trifluoromethanesulfonyl)imide ($Li(CF_3SO_2)_2N$, LiTFSI). When the lithium salt includes both the first and second lithium salts, the output performance of the battery may be improved.

In exemplary embodiments, the ratio of the molar concentration of the first lithium salt to the molar concentration of the second lithium salt in the electrolyte may be greater than 1 and less than or equal to 3. In some embodiments, the ratio of the molar concentration of the first lithium salt to the molar concentration of the second lithium salt in the electrolyte may be 1.2 to 2.

In exemplary embodiments, the molar concentration of the first lithium salt may be 0.5 M to 1.0 M. In some embodiments, the molar concentration of the first lithium salt may be 0.6 M to 1.0 M.

In exemplary embodiments, the molar concentration of the second lithium salt may be 0.01 M to 0.5 M. In some embodiments, the molar concentration of the second lithium salt may be 0.1 M to 0.4 M.

Within the above range, the output performance and cycle life characteristics of the battery may be improved.

In exemplary embodiments, the fluorinated organic solvent may include a linear fluorinated organic solvent and a cyclic fluorinated organic solvent. The term "fluorinated organic solvent" may mean an organic solvent in which at least one hydrogen atom is substituted with fluorine.

In exemplary embodiments, the linear fluorinated organic solvent may include at least one selected from the group consisting of a fluorine-substituted linear ether solvent, a fluorine-substituted linear carbonate solvent, and a fluorine-substituted linear ester solvent.

The fluorine-substituted linear ether solvent may include, for example, 1,1,2,2-tetrafluoroethyl 2,2,2-trifluoroethyl ether, 1,1,2,2-tetrafluoroethyl 2,2,3,3-tetrafluoropropyl ether, 1H,1H,5H-octafluoropentyl 1,1,2,2-tetrafluoroethyl ether, 2,2,3,3-tetrafluoro-1,4-dimethoxybutane, and the like.

The fluorine-substituted linear carbonate solvent may include, for example, methyl 2,2,2-trifluoroethyl carbonate, methyl trifluoromethyl carbonate, ethyl 2,2,2-trifluoroethyl carbonate, and the like.

The fluorine-substituted linear ester solvent may include, for example, 2,2-difluoroacetate, methyl difluoroacetate, ethyl difluoroacetate, 2,2-difluoroethyl acetate, and the like.

The above-described examples of linear fluorinated organic solvents may be used alone or in combination of two or more thereof.

In exemplary embodiments, the cyclic fluorinated organic solvent may include a fluorine-substituted cyclic carbonate-based solvent. The fluorine-substituted cyclic carbonate-based solvent may include, for example, fluoroethylene carbonate or difluoroethylene carbonate.

In exemplary embodiments, the ratio of the content of the linear fluorinated organic solvent to the content of the cyclic fluorinated organic solvent in the total volume of the fluorinated organic solvent may be 3 to 6. In some embodiments, the ratio of the content of the linear fluorinated organic solvent to the content of the cyclic fluorinated organic solvent in the total volume of the fluorinated organic solvent may be 3 to 4.5.

Within the above range, the ratio between the cyclic and linear solvents may be appropriate such that the solubility of the lithium salt is sufficiently high, and byproducts with low chemical stability are not formed during charging and discharging of the battery.

The electrolyte may further include a non-fluorinated organic solvent. The non-fluorinated organic solvent may include, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate

(MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, $\gamma$-butyrolactone, and propylene sulfite. These may be used alone or in combination of two or more thereof.

The electrolyte may further include an additive.

The additive may include, for example, an unsaturated cyclic carbonate compound, a sultone compound, a cyclic sulfate compound, a cyclic sulfite compound, a phosphate compound, and a borate compound.

The unsaturated cyclic carbonate compound may include vinylene carbonate (VC), vinyl ethylene carbonate (VEC), and the like.

The sultone compound may include 1,3-propane sultone, 1,3-propene sultone, 1,4-butane sultone, and the like.

The cyclic sulfate compound may include 1,2-ethylene sulfate, 1,2-propylene sulfate, and the like.

The cyclic sulfite compound may include ethylene sulfite, butylene sulfite, and the like.

The phosphate compound may include lithium difluoro bis(oxalato) phosphate, lithium difluoro phosphate, and the like.

The borate compound may include lithium bis(oxalato) borate, and the like.

The invention relates also to the following numbered aspects:

Aspect 1.A lithium secondary battery comprising:

an anode including a lithium metal layer and a solid electrolyte interphase (SEI) layer disposed on the lithium metal layer, the anode having a first peak ratio of 1 to 7, as defined by Equation 1 below;
a cathode disposed opposite the anode; and
an electrolyte:

$$[Equation\ 1]$$

$$R_1 = I_F/I_{CC}$$

(in Equation 1, $R_1$ denotes the first peak ratio, $I_{CC}$ denotes the peak intensity in the range of 283.0 eV to 286.5 eV obtained from X-ray photoelectron spectroscopy (XPS) analysis of the solid electrolyte interphase layer, and $I_F$ denotes the peak intensity in the range of 682.0 eV to 686.5 eV obtained from the XPS analysis).

Aspect 2. The lithium secondary battery according to aspect 1, wherein the first peak ratio is 2 to 6.

Aspect 3. The lithium secondary battery according to aspect 1 or 2, wherein the electrolyte comprises a lithium salt and a fluorinated organic solvent.

Aspect 4. The lithium secondary battery according to aspect 3, wherein the fluorinated organic solvent includes a linear fluorinated organic solvent and a cyclic fluorinated organic solvent.

Aspect 5. The lithium secondary battery according to aspect 4, wherein the ratio of the content of the linear fluorinated organic solvent to the content of the cyclic fluorinated organic solvent in the total volume of the fluorinated organic solvent is 3 to 6.

Aspect 6. The lithium secondary battery according to aspect 4 or 5, wherein the linear fluorinated organic solvent includes at least one selected from the group consisting of a fluorine-substituted linear ether solvent, a fluorine-substituted linear carbonate solvent, and a fluorine-substituted linear ester solvent.

Aspect 7. The lithium secondary battery according to any one of aspects 4 to 6, wherein the cyclic fluorinated organic solvent includes a fluorine-substituted cyclic carbonate-based solvent.

Aspect 8. The lithium secondary battery according to any one of aspects 3 to 7, wherein the lithium salt includes a first lithium salt including $LiPF_6$ and a second lithium salt including lithium bis(trifluoromethanesulfonyl)imide (LiTFSI).

Aspect 9. The lithium secondary battery according to aspect 8, wherein the ratio of the molar concentration of the first lithium salt to the molar concentration of the second lithium salt in the electrolyte is greater than 1 and less than or equal to 3.

Aspect 10. The lithium secondary battery according to aspect 8 or 9, wherein the molar concentration of the first lithium salt is 0.5 M to 1.0 M, and the molar concentration of the second lithium salt is 0.01 M to 0.5 M.

Aspect 11. A lithium secondary battery comprising:

an anode including a lithium metal layer and a solid electrolyte interphase (SEI) layer disposed on the lithium metal layer, the anode having a second peak ratio of 3 to 15, as defined by Equation 2 below;
a cathode disposed opposite the anode; and
an electrolyte:

$$[Equation\ 2]$$

$$R_2 = I_F/I_{CO}$$

(in Equation 2, $R_2$ denotes the second peak ratio, $I_{CO}$ denotes the peak intensity in the range of 287.5 eV to 292.0 eV obtained from X-ray photoelectron spectroscopy (XPS) analysis of the solid electrolyte interphase layer, and $I_F$ denotes the peak intensity in the range of 682.0 eV to 686.5 eV obtained from XPS analysis).

Aspect 12. The lithium secondary battery according to aspect 11, wherein the second peak ratio is 5 to 10.

## Example 1

A mixed solvent including fluoroethylene carbonate and 2,2,3,3-tetrafluoro-1,4-dimethoxybutane at a volume ratio of 1:4 and an electrolyte including 1 M $LiPF_6$ were prepared.

A cathode slurry was prepared by adding 96 wt% lithium-nickel/cobalt/manganese oxide as a cathode active material, 2.0 wt% polyvinylidene fluoride (PVDF) as a binder, and 2.0 wt% Super-P as a conductive material to N-methylpyrrolidone (NMP). The cathode slurry was uniformly applied to an aluminum substrate having a thickness of 12 $\mu$m, and then dried and roll-pressed to fabricate a cathode.

A lithium foil having a thickness of 100 $\mu$m was used as an anode.

The cathode and anode were respectively notched into a predetermined size and stacked with a porous polyethylene film (thickness: 13 $\mu$m) as a separator between them to produce an electrode assembly.

The electrode assembly was placed in a pouch, and three sides of the pouch were sealed except for one side for electrolyte injection. At this time, the portion with electrode tabs was included in the sealed part. After injecting the electrolyte through the electrolyte injection side, the remaining electrolyte injection side was also sealed, and the cell was allowed to stand for 12 hours or more for impregnation to manufacture a 2000 mAh lithium secondary battery.

The lithium secondary battery was charged at 0.5C and discharged at 0.5C to complete the formation charge and discharge process.

**Example 2**

A lithium secondary battery was manufactured in the same manner as in Example 1, except that a mixed solvent including fluoroethylene carbonate and methyl 2,2,2-trifluoroethyl carbonate at a volume ratio of 1:4, and an electrolyte including 0.6 M $LiPF_6$ and 0.4 M lithium bis(trifluoromethanesulfonyl)imide (LiTFSI) were prepared and used.

**Example 3**

A lithium secondary battery was manufactured in the same manner as in Example 1, except that a mixed solvent including fluoroethylene carbonate and 2,2,3,3-tetrafluoro-1,4-dimethoxybutane at a volume ratio of 1:4, and an electrolyte including 0.6 M $LiPF_6$ and 0.4 M LiTFSI were prepared and used.

**Example 4**

A lithium secondary battery was manufactured in the same manner as in Example 1, except that a mixed solvent including fluoroethylene carbonate and methyl 2,2,2-trifluoroethyl carbonate at a volume ratio of 25:75, and an electrolyte including 0.6 M $LiPF_6$ and 0.4 M LiTFSI were prepared and used.

**Comparative Example 1**

A lithium secondary battery was manufactured in the same manner as in Example 1, except that an electrolyte including 1 M $LiPF_6$ dissolved in a mixed solvent including ethylene carbonate and ethyl methyl carbonate at a volume ratio of 3:7, and further including 2 wt% fluoroethylene carbonate based on the total weight of the electrolyte, was prepared and used.

**Comparative Example 2**

A lithium secondary battery was manufactured in the same manner as in Example 1, except that an electrolyte including 2,2,3,3-tetrafluoro-1,4-dimethoxybutane as a solvent and 1 M $LiPF_6$ was prepared and used.

**Experimental Example**

The lithium secondary batteries of the examples and comparative examples were evaluated using the following method, and the results are shown in Table 1.

(1) XPS analysis

The lithium secondary batteries of the examples and comparative examples were disassembled to confirm the formation of a solid electrolyte interphase (SEI) layer on the surface of the lithium foil anode. The SEI was analyzed using X-ray photoelectron spectroscopy (XPS). Peaks were observed in the ranges of 283.0 to 286.5 eV, 287.5 to 292.0 eV, and 682.0 to 686.5 eV in the obtained XPS spectra. The intensities of these peaks were used to calculate the first peak ratio and second peak ratio according to Equations 1 and 2, respectively.

FIG. 2 shows the XPS analysis results of the SEI layer of Example 1. Specifically, from left to right, the XPS analysis results for fluorine (F), carbon (C), and lithium (Li) are shown, and the chemical bonds and peak positions corresponding to each peak are described. In each XPS analysis results, the solid line represents the sum of the graphs indicated by dotted, dashed, single-dotted, or double-dotted lines.

(2) Evaluation of capacity retention

For the lithium secondary batteries of the examples and comparative examples, charging was performed at 0.5C and discharging was performed at 0.5C to measure the initial discharge capacity. Thereafter, the above charge and discharge process, defined as one cycle, were repeated for 100 cycles, and the discharge capacity at the 100th cycle was measured. The capacity retention was calculated as the percentage of the discharge capacity at the 100th cycle relative to the initial discharge capacity.

[TABLE 1]

| | First peak ratio | Second peak ratio | Capacity retention (%) |
|---|---|---|---|
| Example 1 | 3.45 | 9.60 | 82 |
| Example 2 | 2.71 | 6.73 | 80 |
| Example 3 | 3.30 | 9.48 | 86 |
| Example 4 | 3.50 | 9.71 | 78 |
| Comparative Example 1 | 0.89 | 2.79 | 6 |
| Comparative Example 2 | 7.51 | 27.15 | 4 |

Referring to FIG. 2 and Table 1, the lithium secondary batteries of the examples had a first peak ratio of 1 to 7 and a second peak ratio of 3 to 15, thereby maintaining high capacities even during repeated charge and discharge cycles. Consequently, the cycle life characteristics of the lithium secondary batteries of the examples were improved.

It was confirmed that the lithium secondary batteries of the comparative examples exhibited significantly deteriorated cycle life characteristics compared to those of the examples, because the first peak ratio was less than 1 or greater than 7, or the second peak ratio was less than 3 or greater than 15.

The contents described above are merely examples of applying the principles of the present disclosure, and other configurations may be further included without departing from the scope of the present disclosure.

[Description of Reference Numerals]

    100: Separator
    200: Anode
    210: Lithium metal layer
    205: Solid electrolyte interphase layer
    300: Cathode
    310: Cathode current collector
    320: Cathode active material layer

**Claims**

1. A lithium secondary battery comprising:

    an anode including a lithium metal layer and a solid electrolyte interphase (SEI) layer disposed on the lithium metal layer, the anode having a first peak ratio of 1 to 7, as defined by Equation 1 below;
    a cathode disposed opposite the anode; and
    an electrolyte:

$$[\text{Equation 1}]$$

$$R_1 = I_F/I_{CC}$$

(in Equation 1, $R_1$ denotes the first peak ratio, $I_{CC}$ denotes the peak intensity in the range of 283.0 eV to 286.5 eV obtained from X-ray photoelectron spectroscopy (XPS) analysis of the solid electrolyte interphase layer, and $I_F$ denotes the peak intensity in the range of 682.0 eV to 686.5 eV obtained from the XPS analysis).

2. The lithium secondary battery according to claim 1, wherein the first peak ratio is 2 to 6.

3. The lithium secondary battery according to claim 1 or 2, wherein the electrolyte comprises a lithium salt and a fluorinated organic solvent.

4. The lithium secondary battery according to claim 3, wherein the fluorinated organic solvent includes a linear fluorinated organic solvent and a cyclic fluorinated organic solvent.

5. The lithium secondary battery according to claim 4, wherein the ratio of the content of the linear fluorinated organic solvent to the content of the cyclic fluorinated organic solvent in the total volume of the fluorinated organic solvent is 3 to 6.

6. The lithium secondary battery according to claim 4 or 5, wherein the linear fluorinated organic solvent includes at least one selected from the group consisting of a fluorine-substituted linear ether solvent, a fluorine-substituted linear carbonate solvent, and a fluorine-substituted linear ester solvent.

7. The lithium secondary battery according to any one of claims 4 to 6, wherein the cyclic fluorinated organic solvent includes a fluorine-substituted cyclic carbonate-based solvent.

8. The lithium secondary battery according to any one of claims 3 to 7, wherein the lithium salt includes a first lithium salt including $LiPF_6$ and a second lithium salt including lithium bis(trifluoromethanesulfonyl)imide (LiTFSI).

9. The lithium secondary battery according to claim 8, wherein the ratio of the molar concentration of the first lithium salt to the molar concentration of the second lithium salt in the electrolyte is greater than 1 and less than or equal to 3.

10. The lithium secondary battery according to claim 8 or 9, wherein the molar concentration of the first lithium salt is 0.5 M to 1.0 M, and the molar concentration of the second lithium salt is 0.01 M to 0.5 M.

11. A lithium secondary battery comprising:

an anode including a lithium metal layer and a solid electrolyte interphase (SEI) layer disposed on the lithium metal layer, the anode having a second peak ratio of 3 to 15, as defined by Equation 2 below;
a cathode disposed opposite the anode; and
an electrolyte:

$$[\text{Equation 2}]$$

$$R_2 = I_F/I_{CO}$$

(in Equation 2, $R_2$ denotes the second peak ratio, $I_{CO}$ denotes the peak intensity in the range of 287.5 eV to 292.0 eV obtained from X-ray photoelectron spectroscopy (XPS) analysis of the solid electrolyte interphase layer, and $I_F$ denotes the peak intensity in the range of 682.0 eV to 686.5 eV obtained from XPS analysis).

12. The lithium secondary battery according to claim 11, wherein the second peak ratio is 5 to 10.

[FIG. 1]

[FIG. 2]

Europäisches Patentamt

European Patent Office

Office européen des brevets

## EUROPEAN SEARCH REPORT

**Application Number**

EP 25 21 6179

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2022 0153284 A (SEOUL NATIONAL UNIVERSITY R&DB FOUNDATION) 18 November 2022 (2022-11-18) | 1,3-10 | INV.<br>H01M4/134<br>H01M4/38 |
| A | * abstract * | 2,11,12 | H01M4/62 |
| X,P | & US 2025/015351 A1 (SEOUL NATIONAL UNIVERSITY R&DB FOUNDATION) 9 January 2025 (2025-01-09) | 1,3-10 | H01M10/052<br>H01M10/0568<br>H01M10/0569 |
| A,P | * paragraph [0006] - paragraph [0018] *<br>* paragraph [0047] - paragraph [0056] *<br>* paragraph [0061] - paragraph [0064] *<br>* paragraph [0075] - paragraph [0077]; figure 6 *<br>* paragraph [0091] - paragraph [0102] *<br>* paragraph [0109] - paragraph [0117]; figures 20-23 *<br>* claims 1-3, 5, 6, 8-12, 15-18 * | 2,11,12 | ADD.<br>H01M4/02 |
| X | WO 2024/043649 A1 (LG ENERGY SOLUTION, LTD.; KOREA ADVANCED INSTITUTE OF SCIENCE & TECH.) 29 February 2024 (2024-02-29) | 1,3-7 | |
| A | * abstract * | 2,8-12 | TECHNICAL FIELDS SEARCHED (IPC) |
| X,P | & EP 4 553 945 A1 (LG ENERGY SOLUTION, LTD.; KOREA ADVANCED INSTITUTE OF SCIENCE & TECH.) 14 May 2025 (2025-05-14) | 1,3-7 | H01M |
| A,P | * paragraph [0014] - paragraph [0028] *<br>* comparative example 2; example 1 *<br>* paragraph [0038] - paragraph [0039] *<br>* paragraph [0069] - paragraph [0074]; figure 10 *<br>* claims 1, 9-11, 14, 16, 17 * | 2,8-12 | |

-/--

The present search report has been drawn up for all claims

| Place of search | Date of completion of the search | Examiner |
|---|---|---|
| Munich | 26 March 2026 | Masson, Jean-Pierre |

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/411697 A1 (HYUNDAI MOTOR CO., LTD.; KIA CORP.; KOREA ADVANCED INST. SCI. & TECH.) 21 December 2023 (2023-12-21) | 1,3-7 | |
| A | * paragraph [0008] - paragraph [0029] * <br> * paragraph [0053] - paragraph [0055] * <br> * paragraph [0063] - paragraph [0065] * <br> * paragraph [0070] - paragraph [0080] * <br> * preparation example 1; <br> table 1 * <br> * paragraph [0119]; figures 5A, 5E * <br> * claims 1, 3, 5-7, 11, 12, 15 * <br> ----- | 2,8-12 | |
| X | G. ZHANG ET AL: "A bifunctional fluorinated ether co-solvent for dendrite-free and long-term lithium metal batteries", <br> NANO ENERGY, <br> vol. 95, 7 February 2022 (2022-02-07), <br> XP087007875, <br> ISSN: 2211-2855, DOI: <br> 10.1016/J.NANOEN.2022.107014 <br> [retrieved on 2022-02-07] | 1,3-7 | |
| A | * the whole document * <br> * page 7; figure 5 * <br> ----- | 2,8-12 | |
| X | S. LIN ET AL: "Functional Localized High-Concentration Ether-Based Electrolyte for Stabilizing High-Voltage Lithium-Metal Battery", <br> ACS APPLIED MATERIALS & INTERFACES, <br> vol. 12, no. 30, 29 June 2020 (2020-06-29) <br> , pages 33710-33718, XP055925721, <br> United States <br> ISSN: 1944-8244, DOI: <br> 10.1021/acsami.0c07904 | 1,3-7 | |
| A | * the whole document * <br> * page 33716; figure 6b * <br> ----- | 2,8-12 | |

TECHNICAL FIELDS
SEARCHED (IPC)

The present search report has been drawn up for all claims

| Place of search | Date of completion of the search | Examiner |
|---|---|---|
| Munich | 26 March 2026 | Masson, Jean-Pierre |

EPO FORM 1503 03.82 (P04C01)

## ANNEX TO THE EUROPEAN SEARCH REPORT
## ON EUROPEAN PATENT APPLICATION NO.

EP 25 21 6179

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2026

| Patent document cited in search report | Publication date | Patent family member(s) | | Publication date |
|---|---|---|---|---|
| KR 20220153284 A | 18-11-2022 | KR | 20220153284 A | 18-11-2022 |
| | | US | 2025015351 A1 | 09-01-2025 |
| | | WO | 2022240011 A1 | 17-11-2022 |
| WO 2024043649 A1 | 29-02-2024 | CN | 119678286 A | 21-03-2025 |
| | | EP | 4553945 A1 | 14-05-2025 |
| | | JP | 2025527702 A | 22-08-2025 |
| | | WO | 2024043649 A1 | 29-02-2024 |
| US 2023411697 A1 | 21-12-2023 | CN | 117219853 A | 12-12-2023 |
| | | DE | 102023112296 A1 | 14-12-2023 |
| | | KR | 20230169560 A | 18-12-2023 |
| | | US | 2023411697 A1 | 21-12-2023 |

EPO FORM P0459

For more details about this annex : see Official Journal of the European Patent Office, No. 12/82